# EUROPEAN PATENT APPLICATION

(11) **EP 2 012 295 A1**
(43) Date of publication of application: **07.01.2009**
(21) Application number: 07741968.7
(22) Date of filing: 19.04.2007
(51) Int. Cl.: G09F 9/00

(54) **REINFORCING SHEET FOR IMAGE DISPLAY, IMAGE DISPLAY, AND METHOD FOR REINFORCING THE SAME**

(30) Priority: 24.04.2006 JP 2006119465; 08.03.2007 JP 2007058685; 09.03.2007 JP 2007060443
(71) Applicant: Nitto Denko Corporation, Ibaraki-shi, Osaka 567-8680 (JP)
(72) Inventor: KAWAGUCHI, Yasuhiko, Ibaraki-shi, Osaka; 567-8680 (JP); TACHIBANA, Katsuhiko, Ibaraki-shi, Osaka; 567-8680 (JP); ABE, Hideo, Ibaraki-shi, Osaka; 567-8680 (JP)
(74) Representative: Schwabe - Sandmair - Marx
(86) International application number: PCT/JP2007/058532
(87) International publication number: WO 2007/125815

(57) **Abstract**

Provided are an image display device reinforcing sheet capable of reinforcing image display devices easily and effectively, and an image display device provided with the image display device reinforcing sheet, and further provided is a method for reinforcing the image display device using the image display device reinforcing sheet.

In the image display device provided with an image display unit and a casing, using the image display device reinforcing sheet including a resin layer and a restricting layer laminated thereon, the resin layer is adhesively bonded to the image display unit and/or the casing and then heated. This allows the resin layer after heating to be firmly stuck to the portion to ensure rigidity, so that the strength of this portion can be improved.

## Description

### TECHNICAL FIELD

The present invention relates to an image display device reinforcing sheet for reinforcing image display devices, an image display device provided with the image display device reinforcing sheet, and a method for reinforcing the image display device using the image display device reinforcing sheet.

### BACKGROUND ART

Image display devices equipped with an image display unit including a liquid crystal panel, a plasma display panel or an electroluminescence panel usually include various electrical equipment such as computer displays, televisions, cellular phones and game machines, and are used in a wide range of fields.
There has been proposed that such image display device includes a frame for supporting an image display unit and, for example, the frame is formed of lightweight metal such as aluminum in place of steel to thereby reduce the weight of the device (cf. the following patent document 1).
Patent Document 1: Japanese Unexamined Patent Publication No. 2004-21104

### DISCLOSURE OF THE INVENTION

### Problems to be Solved

The frame formed of lightweight metal can have reduced weight compared to that of steel. However, there is a limit to the degree of weight saving that can ensure practical strength.
The frame of lightweight metal also leads to overall decreased strength, which may result in insufficient strength of portions requiring rigidity.
To cope with this disadvantage, a reinforcing steel plate can be partially provided in the portions requiring rigidity. However, such reinforcing steel plate need to be processed so as to correspond to the portions requiring rigidity and be assembled, resulting in complicated work. In particular, some complex portions require very complicated processing and assembling, or cannot be processed or assembled.

It is an object of the present invention to provide an image display device reinforcing sheet capable of reinforcing image display devices easily and effectively, and an image display device provided with the image display device reinforcing sheet, and to further provide a method for reinforcing the image display device using the image display device reinforcing sheet.

### MEANS FOR SOLVING THE PROBLEM

In order to attain the above-mentioned objective, the image display device reinforcing sheet of the present invention includes a resin layer; and a restricting layer laminated on the resin layer.
In the image display device reinforcing sheet of the present invention, it is preferable that the restricting layer is a glass cloth.
In the image display device reinforcing sheet of the present invention, it is preferable that the resin layer contains an epoxy resin and a curing agent and that the resin layer further contains synthetic rubber. In the image display device reinforcing sheet of the present invention, it is preferable that the synthetic rubber contains low polar rubber.

In the image display device reinforcing sheet of the present invention, it is preferable that the resin layer further contains a foaming agent and is foamable, and that the resin layer further contains synthetic rubber. In the image display device reinforcing sheet of the present invention, it is preferable that the synthetic rubber contains styrene synthetic rubber and/or acrylonitrile-butadiene rubber.
In the image display device reinforcing sheet of the present invention, it is preferable that the resin layer contains an ethylene copolymer and that the resin layer further contains a filler and a tackifier.

In the image display device reinforcing sheet of the present invention, it is preferable that the resin layer has a Young's modulus at 23°C of 1.0 x 10⁷ N/m² or more.
In the image display device of the present invention, an image display device reinforcing sheet including a resin layer and a restricting layer laminated on the resin layer is arranged.
The method for reinforcing an image display device includes the steps of: arranging an image display device reinforcing sheet including a resin layer and a restricting layer laminated on the resin layer in the image display device; and heating the resin layer.

### EFFECT OF THE INVENTION

According to the image display device reinforcing sheet of the present invention and the method for reinforcing the image display device of the present invention, when the resin layer is arranged in the portion requiring rigidity in the image display device and then heated, it can be stuck firmly to ensure rigidity, so that the strength of this portion can be improved. In addition, the resin layer thus stuck is lightweight and can effectively suppress the increase in weight of the image display device. Further, since the resin layer thus stuck is restrained by the restricting layer, the shape of the resin layer is satisfactorily maintained and the restricting layer can further improve the strength of the resin layer.

Therefore, the image display device of the present invention, although lightweight, can acquire sufficient rigidity, enabling an improvement in durability.
In particular, when the resin layer is arranged in the portion requiring rigidity in the image display device and then foamed, the resin layer can be formed into a foamed layer. This foaming can provide a thicker layer, enabling this portion to have improved strength while sufficiently ensuring rigidity. In addition, the foamed layer is extremely lightweight and can more effectively suppress the increase in weight of the image display device. Further, since the foamed layer is restrained by the restricting layer after foaming, the shape of the foamed layer is satisfactorily maintained and the restricting layer can further improve the strength of the resin layer.

### BRIEF DESCRIPTION OF THE DRAWINGS

[FIG. 1] FIG. 1 is an exploded perspective view of an embodiment (a mode where a resin layer is formed of foamable resin layer) of an image display device according to the present invention;
[FIG. 2] FIG. 2 is a side sectional view of the major portion of the image display device shown in FIG. 1, (a) showing a state before foaming, and (b) showing a state after foaming;

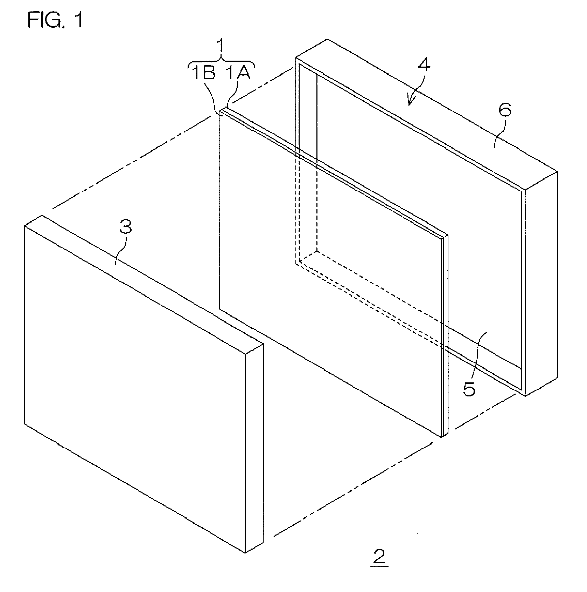

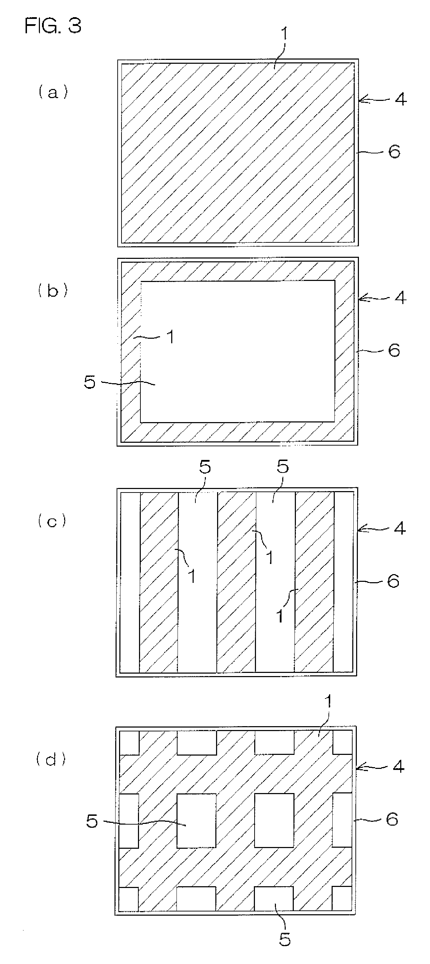

[FIG. 3] FIG. 3 is a front view of the image display device reinforcing sheet shown in FIG. 1, (a) showing a mode where the image display device reinforcing sheet is arranged over the entire inner surface of a bottom plate of a casing, (b) showing a mode where the image display device reinforcing sheet is arranged in a frame shape along the inner peripheral portion of the bottom plate of the casing, (c) showing a mode where the image display device reinforcing sheet is arranged in strips spaced apart from each other on the inner surface of the bottom plate of the casing, and (d) showing a mode where the image display device reinforcing sheet is arranged in a lattice shape on the inner surface of the bottom plate of the casing;

[FIG. 4] FIG. 4 is a side sectional view of the major portion of another embodiment (a mode where a resin layer is formed of curable resin layer or heat-sealable resin layer) of an image display device according to the present invention, (a) showing a state before curing or before heat sealing, and (b) showing a state after curing or after heat sealing;
[FIG. 5] FIG. 5 is a front view of a bottom plate subjected to tests on reinforcing effect B and C in Examples, showing the bottom plate before the image display device reinforcing sheet is arranged;

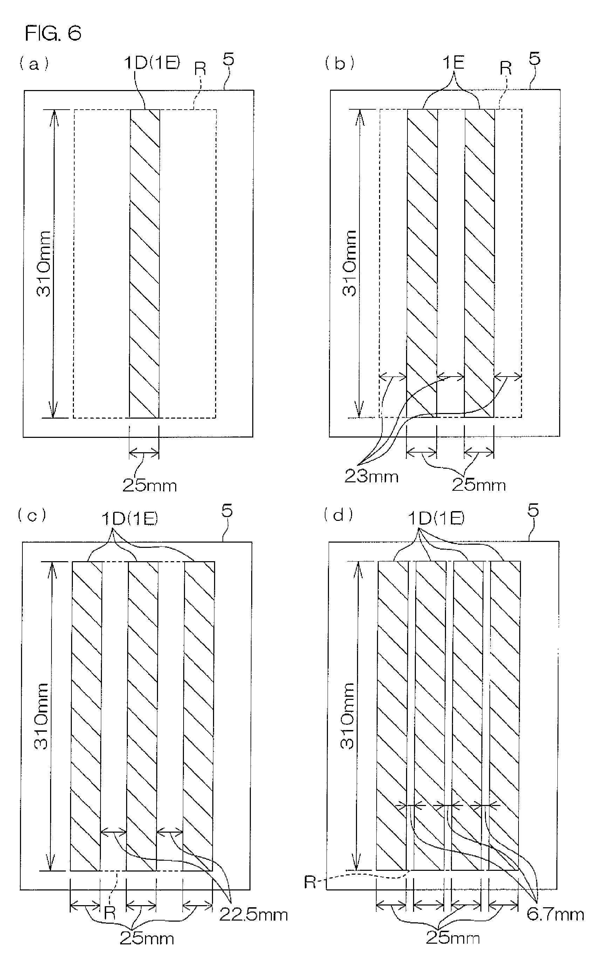

[FIG. 6] FIG. 6 is a front view of a bottom plate on which the image display device reinforcing sheet is arranged under tests on reinforcing effect B and C in Examples, (a) showing a bottom plate on which a sheet of the image display device reinforcing sheet is arranged, (b) showing a bottom plate on which two sheets of the image display device reinforcing sheet are arranged (under test on reinforcing effect C only), (c) showing a bottom plate on which three sheets of the image display device reinforcing sheet are arranged, and (d) showing a bottom plate on which four sheets of the image display device reinforcing sheet are arranged;

[FIG.7] FIG. 7 shows a graph of the results from the evaluation of test on reinforcing effect B; and
[FIG.8] FIG. 8 shows a graph of the results from the evaluation of test on reinforcing effect C.

### EMBODIMENT OF THE INVENTION

The image display device reinforcing sheet of the present invention includes a resin layer and a restricting layer laminated on the resin layer.
In the present invention, the resin layer is formed by shaping a resin composition into a sheet form.
The resin composition is not limited as long as it contains at least a resin component, and optionally includes a curing agent, a crosslinking agent and a foaming agent depending on the kind of resin component.

No particular limitation is imposed on the resin component. The resin components that may be used include, for example, thermosetting resin and thermoplastic resin.
No particular limitation is imposed on the thermosetting resin. The thermosetting resins that may be used include, for example, epoxy resin and synthetic rubber.

No particular limitation is imposed on the epoxy resin. The epoxy resins that may be used include, for example, aromatic epoxy resin, aliphatic and cyclo aliphatic epoxy resin and ring containing nitrogen epoxy resin.
The aromatic epoxy resin is an epoxy resin containing a benzene ring as a molecular building unit in a molecular chain. No particular limitation is imposed on the aromatic epoxy resin. The aromatic epoxy resins that may be used include, for example, bisphenol epoxy resin such as bisphenol A type epoxy resin, dimer acid modified bisphenol A type epoxy resin, bisphenol F type epoxy resin and bisphenol S type epoxy resin; novolak epoxy resin such as phenol novolak epoxy resin and cresol novolak epoxy resin; naphthalene epoxy resin; and biphenyl epoxy resin.

The aliphatic and cyclo aliphatic epoxy resins that may be used include, for example, hydrogenated bisphenol A type epoxy resin, dicyclo type epoxy resin and cyclo aliphatic epoxy resin.
The ring containing nitrogen epoxy resins that may be used include, for example, triglycidyl isocyanurate epoxy resin and hydantoin epoxy resin.
These epoxy resins may be used alone or in combination. Of these epoxy resins, aromatic epoxy resin, and aliphatic and cyclo aliphatic epoxy resin are preferably used, and bisphenol epoxy resin and cyclo aliphatic epoxy resin are more preferably used, in terms of reinforcements.

Epoxy equivalent of this epoxy resin is preferably in the range of 150 to 350 g/eq., for example, when the resin layer is formable; or preferably 450 to 1000 g/eq., for example, when the resin layer is curable. Further, the epoxy resin is preferably liquid at room temperature (23°C), and epoxy resins having a viscosity of 250 dPa·s/25°C or less are preferably used in order to develop a good adhesiveness at low temperature.

The synthetic rubber is preferably used in combination with the epoxy resin. No particular limitation is imposed on the synthetic rubber. The synthetic rubbers that may be used include, for example, styrene synthetic rubber and acrylonitrile-butadiene rubber (NBR: acrylonitrile butadiene copolymer).
The styrene synthetic rubber is synthetic rubber in which at least styrene is used as a raw material monomer. No particular limitation is imposed on the styrene synthetic rubber. The styrene synthetic rubbers that may be used include, for example, styrene-butadiene rubber such as styrene-butadiene random copolymer, styrene-butadiene-styrene block copolymer, styrene-ethylene-butadiene copolymer and styrene-ethylene-butadiene-styrene block copolymer; and styrene-isoprene rubber such as styrene-isoprene-styrene block copolymer.

These may be used alone or in combination. Of these styrene synthetic rubbers, styrene-butadiene rubber is preferably used in terms of reinforcement and adhesion.
The styrene synthetic rubber contains preferably not more than 50% by weight of styrene, or more preferably not more than 35% by weight of styrene. The styrene content of more than this may induce reduction of adhesion under low temperature.

The number average molecular weight of the styrene synthetic rubber is not less than 30, 000, or preferably ranges from 50,000 to 1,000,000. The number average molecular weight of less than 30,000 may induce reduction of adhesion.
Also, the Mooney viscosity of the styrene synthetic rubber is in the range of, for example, 20 to 60 (ML1+4, at 100°C), or preferably 30 to 50 (ML1+4, at 100°C).

The mixing ratio of the styrene synthetic rubber is, for example, 30 to 70 parts by weight, or preferably 40 to 60 parts by weight, per 100 parts by weight of the resin component. The mixing ratio of the styrene synthetic rubber of less than this may induce reduction of adhesion. On the other hand, the mixing ratio of the styrene synthetic rubber of more than this may induce reduction of reinforcement.
When the styrene synthetic rubber is blended as synthetic rubber, an epoxy-modified styrene synthetic rubber is preferably used in combination as synthetic rubber. The use of the epoxy-modified styrene synthetic rubber in combination can provide improved compatibility of the styrene synthetic rubber with an epoxy resin, particularly an aromatic epoxy resin, thereby achieving further improved adhesion and reinforcement.

The epoxy-modified styrene synthetic rubber is synthetic rubber produced by modifying the above-mentioned styrene synthetic rubber at an end of molecular chain or in a molecular chain thereof with an epoxy group. Epoxy equivalent of the epoxy-modified styrene synthetic rubber preferably used is in the range of, for example, 100 to 10,000 g/eq., or preferably 400 to 3,000 g/eq.
The styrene synthetic rubber can be modified with an epoxy group by a known method. For example, an epoxidizing agent such as peracids and hydroperoxides is allowed to react with a double bond in the styrene synthetic rubber in an inert solvent.

The epoxy-modified styrene synthetic rubbers that may be used include, for example, epoxy-modified styrene synthetic rubber in which an epoxy group is introduced in a B polymer block of an A-B type block copolymer or an A-B-A type block copolymer (A represents a styrene polymer block, and B represents conjugated diene polymer block such as a butadiene polymer block and an isoprene polymer block).
To be more specific, for example, epoxy-modified styrene-butadiene-styrene block copolymer, epoxy-modified styrene-ethylene-butadiene-styrene block copolymer and epoxy-modified styrene-isoprene-styrene block copolymer can be used.

These may be used alone or in combination. Of these epoxy-modified styrene synthetic rubbers, epoxy-modified styrene-butadiene-styrene block copolymer is preferably used in terms of ensuring the compatibility of the reinforcement with the adhesion.
In the A-B type block copolymer or the A-B-A type block copolymer, it is preferable that the weight average molecular weight of an A block copolymer, which is a styrene copolymer block, is on the order of 1, 000 to 10, 000, and the glass transition temperature of the same is 7°C or more. Also, it is preferable that the weight average molecular weight of a B block copolymer, which is a conjugated diene polymer block, is on the order of 10, 000 to 500,000, and the glass transition temperature of the same is -20°C or less. It is preferable that a weight ratio of the A block copolymer to the B block copolymer (A block copolymer/B block copolymer) is preferably in the range of 2/98 to 50/50, or more preferably 15/85 to 30/70.

The mixing ratio of the epoxy-modified styrene synthetic rubber is in the range of, for example, 1 to 20 parts by weight, or preferably 5 to 15 parts by weight, per 100 parts by weight of the resin component. The mixing ratio of the epoxy-modified styrene synthetic rubber of less than this may induce reduction of reinforcement and adhesion. On the other hand, the mixing ratio of the epoxy-modified styrene synthetic rubber of more than this may induce reduction of adhesion under low temperature.

The acrylonitrile-butadiene rubber is synthetic rubber obtained by copolymerizing acrylonitrile and butadiene. No particular limitation is imposed on the acrylonitrile-butadiene rubber. The acrylonitrile-butadiene rubbers that may be used include, for example, acrylonitrile-butadiene rubber in which a carboxyl group is introduced, and acrylonitrile-butadiene rubber partially crosslinked with sulfur, metal oxide, etc. The acrylonitrile-butadiene rubber is solid rubber and has excellent compatibility with an epoxy resin. Therefore, the containing of the acrylonitrile-butadiene rubber can provide improved adhesiveness and handleability, and further improved reinforcement in a wide temperature range around room temperature (23°C).

The acrylonitrile-butadiene rubber contains acrylonitrile preferably in the range of 10 to 50% by weight, and the Mooney viscosity thereof is preferably not less than 25 (ML1+4, at 100°C).
The mixing ratio of the acrylonitrile-butadiene rubber is in the range of, for example, 5 to 30 parts by weight, or preferably 8 to 25 parts by weight, per 100 parts by weight of the resin component. The mixing ratio of the acrylonitrile-butadiene rubber of less than this may induce reduction of reinforcing effect. On the other hand, the mixing ratio of the acrylonitrile-butadiene rubber of more than this may induce excessively low viscosity of the resin composition, which leads to poor handleability. On the contrary, the mixing ratio thereof within the above range can develop low-temperature adhesiveness resulting from excellent compatibility with epoxy resin and high-temperature coherence resulting from acrylonitrile-butadiene rubber being solid rubber, thereby achieving excellent handleability and reinforcing effect.

Further, low polar rubber may be used as synthetic rubber. The containing of low polar rubber may achieve further improved adhesion. The low polar rubber is a rubber that does not contain polar group such as an amino group, a carboxyl group and a nitrile group. The low polar rubbers that may be used include, for example, solid or liquid synthetic rubber such as butadiene rubber, polybutene rubber and synthetic natural rubber. The low polar rubber also includes the above-mentioned styrene-butadiene rubber. These may be used alone or in combination. The low polar rubber is preferably used in combination with acrylonitrile-butadiene rubber, and the mixing ratio of the low polar rubber is in the range of, for example, 1 to 70 parts by weight, or preferably 5 to 50 parts by weight, per 100 parts by weight of the resin component.

The thermoplastic resins that may be used include, for example, ethylene copolymer from the viewpoint of heat sealing of the resin layer within a low temperature range (e. g. , 60 to 120°C).
The ethylene copolymer is a resin made of a copolymer of ethylene with a monomer copolymerizable with ethylene. The ethylene copolymers that may be used include, for example, ethylene-vinyl acetate copolymer (EVA) and ethylene-alkyl(meth)acrylate copolymer.

The ethylene-vinyl acetate copolymer is, for example, a random or block copolymer of ethylene and vinyl acetate, or preferably a random copolymer thereof.
The ethylene-vinyl acetate copolymer contains vinyl acetate in the range of, for example, 12 to 50% by weight, or preferably 14 to 46% by weight (in conformity with the MDP method, the same applies to the following), and has a melt flow rate (MFR; in conformity with JIS K 6730; hereinafter simply referred to as MFR) of 1 to 30 g/10 min., or preferably 1 to 15 g/10 min.; a hardness (JIS K7215) of, for example, 60 to 100 degrees, or preferably 70 to 100 degrees; a softening temperature of, for example, 35 to 70°C; and a melting point of, for example, 70 to 100°C.

The ethylene-alkyl(meth)acrylate copolymer is, for example, a random or block copolymer of ethylene and alkyl(meth)acrylate, or preferably a random copolymer thereof.
The alkyl(meth)acrylate is alkyl methacrylate and/or alkyl acrylate, and to be more specific, the alkyl(meth)acrylates that may be used include, for example, alkyl (meth)acrylate (with a linear or branched alkyl moiety having 1 to 18 carbon atoms) such as methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isopentyl (meth)acrylate, hexyl (meth)acrylate, heptyl (meth)acrylate, octyl (meth)acrylate, ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate and octadecyl (meth)acrylate. These alkyl (meth)acrylates can be used alone or in combination.

Ethylene-ethyl acrylate copolymer (EEA) and ethylene-butyl acrylate copolymer (EBA) are preferably used.
The ethylene-ethyl acrylate copolymer contains ethyl acrylate in the range of, for example, 9 to 35% by mass, or preferably 9 to 25% by mass (EA content, MDP method); and has a MFR of, for example, 0.5 to 25 g/10 min., or preferably 0.5 to 20 g/10 min.; a hardness (Shore A, JIS K7215 (1986)) of, for example, 60 to 100 degrees, or preferably 70 to 100 degrees; a softening temperature (BiCat, JIS K7206 (1999)) of, for example, 35 to 70°C; a melting point (JIS K7121 (1987)) of, for example, 70 to 100°C; and a glass transition temperature (DVEmethod) of, for example, -40°C to -20°C.

The ethylene-butyl acrylate copolymer contains butyl acrylate in the range of, for example, 7 to 35% by mass, or preferably 15 to 30% by mass (EB content, DuPont method); and has a MFR of, for example, 1 to 6 g/10 min., or preferably 1 to 4 g/10 min.; a hardness (Shore A, ISO 868 or JIS K7215) of, for example, 75 to 100 degrees, or preferably 80 to 95 degrees; a softening temperature (BiCat, softening point, JIS K7206 or ISO 306) of, for example, 35 to 70°C, or preferably 40 to 65°C; and a melting point (JIS K7121 or ISO 3146) of, for example, 80 to 120°C, or preferably 90 to 100°C.

When the resin component contains an ethylene copolymer, the melting point of the resin composition can be set in the range of, for example, 60 to 120°C, or preferably 70 to 100°C, and the resin layer can be heat-sealed within this temperature range (at low temperature). The above temperature range is set lower than the service temperature (curing temperature, i.e., the temperature at which the curing agent decomposes; e.g., from 150 to 200°C) of the image display reinforcing sheet in which the resin component is thermosetting resin.

In the present invention, when the resin layer is cured, and further when the resin layer is foamed, thermosetting resin is selected as the resin component, and more specifically, one kind or two or more kinds of resin is/are selected from the above-mentioned epoxy resins and synthetic rubbers. Preferably, epoxy resin is selected as an essential component and synthetic rubber is selected as an optional component. More preferably, both the epoxy resin and the synthetic rubber are selected. Even more preferably, for example, the combination use of epoxy resin and styrene synthetic rubber, the combination use of epoxy resin and acrylonitrile-butadiene rubber, or the combination use of epoxy resin and low polar rubber is selected.

In the present invention, when the resin layer is heat-sealed, thermoplastic resin is selected as the resin component, or preferably ethylene copolymer is selected.
The curing agent is blended, for example, when the resin component contains thermosetting resin such as epoxy resin. The curing agents that may be used include, for example, amine compounds, acid anhydride compounds, amide compounds, hydrazide compounds, imidazole compounds and imidazoline compounds. In addition to these, phenol compounds, urea compounds and polysulfide compounds can be used as the curing agent.

The amine compounds that may be used include, for example, ethylenediamine, propylenediamine, diethylenetriamine, triethylenetetramine, amine adducts thereof, metaphenylenediamine, diaminodiphenylmethane and diaminodiphenylsulfone.
The acid anhydride compounds that may be used include, for example, phthalic anhydride, maleic anhydride, tetrahydrophthalic anhydride, hexahydrophthalic anhydride, methyl nadic anhydride, pyromellitic anhydride, dodecenylsuccinic anhydride, dichlorosuccinic anhydride, benzophenonetetracarboxylic anhydride and chlorendic anhydride.

The amide compounds that may be used include, for example, dicyandiamide and polyamide.
The hydrazide compounds that may be used include, for example, dihydrazide such as adipic dihydrazide.
The imidazole compounds that may be used include, for example, methyl imidazole, 2-ethyl-4-methyl imidazole, ethyl imidazole, isopropyl imidazole, 2,4-dimethylimidazole, phenylimidazole, undecylimidazole, heptadecylimidazole and 2-phenyl-4-methylimidazole.

The imidazoline compounds that may be used include, for example, methylimidazoline, 2-ethyl-4-methylimidazoline, ethylimidazoline, isopropylimidazoline, 2,4-dimehtylimidazoline, phenylimidazoline, undecylimidazoline, heptadecylimidazoline and 2-phenyl-4-methyl imidazoline.
These curing agents may be used alone or in combination. Of these curing agents, dicyandiamide is preferably used in terms of adhesion.

The mixing ratio of the curing agent is in the range of, for example, 0.5 to 50 parts by weight, preferably 1 to 40 parts by weight, or more preferably 1 to 15 parts by weight, per 100 parts by weight of the resin component, depending upon the equivalent ratio of the curing agent to the resin component.
If desired, a curing accelerator can be used in combination with the curing agent. The curing accelerator that may be used include, for example, imidazoles, ureas, tertiary amines, phosphorus compounds, quaternary ammonium salts and organic metal salts. These may be used alone or in combination. The mixing ratio of the curing accelerator is in the range of, for example, 0.1 to 20 parts by weight, or preferably 0.2 to 10 parts by weight, per 100 parts by weight of the resin component.

The crosslinking agent is blended, for example, when the resin component contains a crosslinking resin such as synthetic rubber. The crosslinking agents that may be used include, for example, sulfur, sulfur compounds, selenium, magnesium oxide, lead monoxide, organic peroxides (e.g., dicumyl peroxide, 1,1-ditert-butyl-peroxy-3,3,5-trimethylcyclohexane, 2,5-dimethyl-2,5-ditert-butyl-peroxyhexane, 2,5-dimethyl-2,5-ditert-butyl-peroxyhexyne, 1,3-bis(tert-butyl-peroxyisopropyl) benzene, tert-butyl-peroxyketone and tert-butyl-peroxybenzoate), polyamines, oximes (e.g., p-quinone dioxime and p,p'-dibenzoyl quinone dioxime, etc.), nitroso compounds (e.g., p-dinitroso benzine, etc.), resins (e.g., alkyl phenol-formaldehyde resin, melamine-formaldehyde condensate, etc.), and ammonium salts (e.g., ammonium benzoate, etc.).

These crosslinking agents may be used alone or in combination. Of these cross-linking agents, sulfur is preferably used in terms of the curing property and the reinforcement.
The mixing ratio of the crosslinking agent is in the range of, for example, 1 to 20 parts by weight, or preferably 2 to 15 parts by weight, per 100 parts by weight of the resin component. The mixing ratio of the crosslinking agent of less than this may induce reduction in reinforcement. On the other hand, the mixing ratio of the crosslinking agent of more than this may induce reduction in adhesion and may induce cost-defectiveness.

If desired, a crosslinking accelerator can be used in combination with the crosslinking agent. The crosslinking accelerators that may be used include, for example, zinc oxide, disulfides, dithiocarbamic acids, thiazoles, guanidines, sulfenamides, thiurams, xanthogenic acids, aldehyde ammonias, aldehyde amines and thioureas. These crosslinking accelerators may be used alone or in combination. The mixing ratio of the crosslinking accelerator is in the range of, for example, 1 to 20 parts by weight, or preferably 3 to 15 parts by weight, per 100 parts by weight of the resin component.

The foaming agent is blended, for example, when the resin layer is desired to be foamed. The foaming agents that may be used include, for example, an inorganic foaming agent and an organic foaming agent. The inorganic foaming agents that may be used include, for example, ammonium carbonate, ammonium hydrogen carbonate, sodium hydrogen carbonate, ammonium nitrite, sodium borohydride and azides.
The organic foaming agents that may be used include, for example, an N-nitroso compound (N,N'-dinitrosopentamethylenetetramine, N,N'-dimethyl-N,N'-dinitrosoterephthalamide, etc.), an azo compound (e.g., azobis (isobutyronitrile), azodicarboxylic amide, barium azodicarboxylate, etc.), alkane fluoride (e.g., trichloromonofluoromethane, dichloromonofluoromethane, etc.), a hydrazine compound (e.g., paratoluene sulfonyl hydrazide, diphenylsulfone-3,3'-disulfonyl hydrazide, 4,4'-oxybis (benzene sulfonyl hydrazide), allylbis (sulfonyl hydrazide), etc.), a semicarbazide compound (e.g., p-toluylenesulfonyl semicarbazide, 4,4'-oxybis(benzene sulfonyl semicarbazide, etc.), and a triazole compound (e.g., 5-morphoryl-1,2,3,4-thiatriazole, etc.).

The foaming agents may be in the form of thermally expansible microparticles comprising microcapsules formed by encapsulating thermally expansive material (e.g., isobutane, pentane, etc.) in a microcapsule (e.g., microcapsule of thermoplastic resin such as vinylidene chloride, acrylonitrile, acrylic ester and methacrylic ester). Commercially available products such as Microsphere (product name; manufactured by Matsumoto Yushi-Seiyaku Co., Ltd.), maybe used as the thermally expansible microparticles.

These foaming agents may be used alone or in combination. Of these foaming agents, 4,4'-oxybis (benzene sulfonyl hydrazide) (OBSH) is preferably used in terms of less susceptible to external factors and foaming stability.
The mixing ratio of the foaming agent is in the range of 0.1 to 30 parts by weight, or preferably 0.5 to 20 parts by weight, per 100 parts by weight of the resin component. The mixing ratio of the foaming agent of less than this may induce insufficient foaming, so that it causes reduction in thickness and thus in reinforcement. On the other hand, the mixing ratio of the foaming agent of more than this may induce reduction in density and thus in reinforcement.

If desired, a foaming auxiliary agent can be used in combination with the foaming agent. The foaming auxiliary agents that may be used include, for example, zinc stearate, a urea compound, a salicylic compound and a benzoic compound. These foaming auxiliary agents may be used alone or in combination. The mixing ratio of the foaming auxiliary agent is in the range of, for example, 0.1 to 10 parts by weight, or preferably 0.2 to 5 parts by weight, per 100 parts by weight of the resin component.

In addition to these components described above, a filler and a tackifier may be included in the resin composition. Further, if desired, known additives such as a thixotropic agent (e.g., montmorillonite etc.), lubricant (e.g., stearic acid, etc.), pigment, an antiscorching agent, a stabilizer, a softening agent, a plasticizer, an antiaging agent, an antioxidant, an ultraviolet absorber, a coloring agent, a mildewproofing agent and a flame retardant can also be appropriately included in the resin composition.

The fillers that may be used include, for example, calcium carbonate (e.g., calcium carbonate heavy, calcium carbonate light, Hakuenka (R) (colloidal calcium carbonate), etc.), talc, mica, clay, mica powder, bentonite (including organite), silica, alumina, aluminium silicate, titanium oxide, carbon black, acetylene black, aluminium powder and glass powder (powder). These fillers may be used alone or in combination. The mixing ratio of the filler is in the range of, for example, 1 to 500 parts by weight, or preferably 10 to 300 parts by weight, per 100 parts by weight of the resin component.

The tackifiers that may be used include, for example, rosin resin, terpene resin (e.g., terpene-aromatic liquid resin, etc.), cumarone-indene resin (cumarone resin), petroleum resin (e.g., C5/C6 petroleum resin, C5 petroleum resin, C9 petroleum resin, C5/C9 petroleum resin, etc.) and phenolic resin. These tackifiers may be used alone or in combination. The tackifier has a melting point in the range of, for example, 50 to 150°C, depending upon the kind, the mixing ratio and the melting point of the resin component. The mixing ratio of the tackifier is in the range of, for example, 1 to 200 parts by weight, or preferably 5 to 150 parts by weight, per 100 parts by weight of the resin component.

When the resin composition contains an ethylene copolymer, it is preferable that the filler and the tackifier are further blended.
When the resin composition contains a thermosetting resin and a curing agent, the resin layer can be a curable resin layer. When the resin composition contains a thermosetting resin, a curing agent and a foaming agent, the resin layer can be a formable resin layer. When the resin composition contains a thermoplastic resin, the resin layer can be a heat-sealable resin layer.

The resin composition can be obtained by blending each of the above components at the above mixing ratio, and can be prepared in the form of kneaded material by kneading the blended components, for example, by using a mixing roll, a pressure kneader or an extruder, though not particularly limited thereto.
The kneaded material thus obtained has a flow tester viscosity (60°C, 24 kg load) in the range of, for example, 50 to 50,000 Pa·s, or preferably 100 to 5,000 Pa·s.

Thereafter, the kneaded material thus obtained is rolled into a sheet form, for example, by calendaring, extrusion or press molding to form the resin layer, though this is not particularly limitative.
In the formation of this resin layer, temperature conditions are set so that a curing agent or a foaming agent do not substantially decompose when the resin layer contains the curing agent or the foaming agent, though this is not particularly limitative. When the resin composition contains a thermoplastic resin (ethylene copolymer), the resin layer is formed, for example, at 60 to 150°C.

The rolled resin layer has a thickness in the range of, for example, 0.2 to 3.0 mm, or preferably 0.5 to 2.5 mm.
Further, in the present invention, the resin composition contains the ethylene copolymer, the filler and the tackifier, and the resin layer formed by rolling in the same manner as above has a Young's modulus at 23°C (room temperature) of, for example, 1.0 x 10⁷ N/m² or more, or preferably 5.0 x 10⁷N/m² or more, and usually 1.0 x 10¹⁰ N/m² or less. The Young's modulus of the resin layer of less than 1.0 x 10⁷ N/m² may induce insufficient reinforcement.

The Young's modulus is calculated, for example, by cutting the resin layer formed by rolling into a 0.8-mm-thick sheet into pieces having 10 mm wide and 100 mm long, and measuring tensile strength in a distance between the chucks of 50 mm at a rate of 5 mm/min. with a universal testing machine.
In the present invention, the restricting layer serves to restrain the resin layer to maintain the shape of the heated resin layer, and serves to provide tenacity for the resin layer to achieve improved strength. The restricting layer is in the form of a sheet and is formed of light weight and thin-film material to be stuck firmly and integrally with the heated resin layer. The materials that may be used for the restricting layer include, for example, glass cloth, metal foil, synthetic resin nonwoven cloth and carbon fiber.

The glass cloth is a cloth formed of glass fibers, and a known glass cloth can be used. A resin-impregnated glass cloth is included as the glass cloth. The resin-impregnated glass cloth is the above-mentioned glass cloth impregnated with synthetic resin such as thermosetting resin or thermoplastic resin, and a known resin-impregnated glass cloth can be used. The thermosetting resins that may be used include, for example, epoxy resin, urethane resin, melamine resin and phenol resin. The thermoplastic resins that may be used include, for example, vinyl acetate resin, ethylene vinyl acetate copolymer (EVA), vinyl chloride resin and EVA-vinyl chloride resin copolymer. The thermosetting resin mentioned above and the thermoplastic resin mentioned above (e.g., melamine resin and vinyl acetate resin) may be combined.

The metal foils that maybe used include, for example, known metal foils such as an aluminum foil and a steel foil.
Of these materials, the glass cloth is preferably used, in terms of weight, degree of adhesion, strength and cost.
The restricting layer has a thickness in the range of, for example, 0.05 to 2 mm, or preferably 0.1 to 1.0 mm.

The image display device reinforcing sheet of the present invention can be obtained by adhesively bonding the resin layer and the restricting layer, both described above, to be laminated. The total thickness of the resin layer and the restricting layer is in the range of, for example, 0.3 to 5 mm, or preferably 0.6 to 3.5 mm.
If desired, a separator (release paper) can also be adhesively bonded to the surface of the resin layer (the surface opposite to the rear surface on which the restricting layer is laminated) of the obtained image display device reinforcing sheet until the image display device reinforcing sheet is actually used.

The image display device reinforcing sheet of the present invention is used to reinforce the image display device.
The image display device is electrical equipment equipped with an image display unit (monitor) including a liquid crystal panel, a plasma display panel or an electroluminescence panel, though not particularly limited thereto. The image display devices that may be used include, for example, computer displays, televisions, cellular phones and game machines.

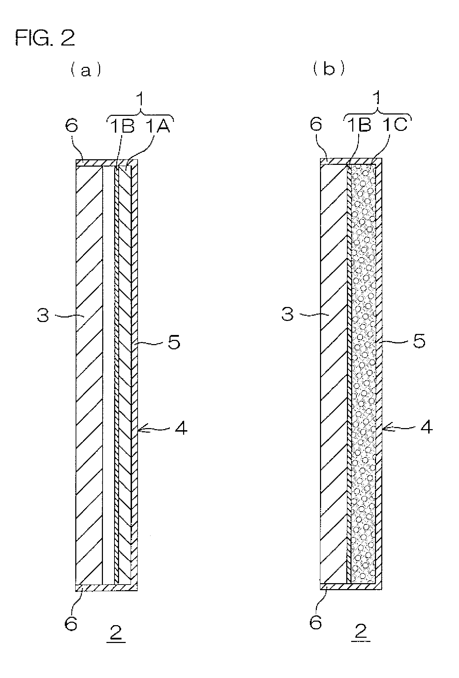

FIGS. 1 to 3 are drawings for explaining a method for reinforcing an image display device by arranging an image display device reinforcing sheet, which is an embodiment of the method for reinforcing the image display device of the present invention, in the image display device and heating a resin layer to be foamed. FIG. 1 is an exploded perspective view of an image display device; FIG. 2 is a side sectional view of the major portion of the image display device shown in FIG. 1, (a) showing a state before foaming, and (b) showing a state after foaming; and FIG. 3 is a front view of the image display device reinforcing sheet shown in FIG. 1, (a) to (d) showing various modes of arranging the image display device reinforcing sheet.

Next, with reference to FIGS. 1 to 3, a method for reinforcing an image display device by arranging an image display device reinforcing sheet, which is an embodiment of the method for reinforcing the image display device of the present invention, in the image display device and heating a foamable resin layer to be foamed will be explained.
In this method, first, an image display device reinforcing sheet 1 is arranged in an image display device 2. To arrange the image display device reinforcing sheet 1 in the image display device 2, for example, as shown in FIG. 1, the image display device reinforcing sheet 1 is adhesively bonded to an image display unit 3 or a casing 4 of the image display device 2.

More specifically, in FIG. 1, the image display device 2 is a computer display, a television, a cellular phone, or a game machine as described above, and includes an image display unit 3 equipped with a liquid crystal panel, a plasma display panel or an electroluminescence panel, and a casing 4 which houses the image display unit 3.
In FIG. 1, the image display unit 3 is formed in a generally rectangular plate-like shape in plane view. The casing 4 includes a bottom plate 5 and a frame plate 6, and is formed in a rectangular frame-like shape having a bottom and capable of housing the image display unit 3. The shapes of the image display unit 3 and the casing 4 are appropriately selected according to the type of the image display device 2. The material for forming the casing 4 is not particularly limited and is appropriately selected. The materials that may be used include, for example, resin and metal.

As described above, the image display device reinforcing sheet 1 includes a resin layer 1A, which is formable, and a restricting layer 1B laminated on the resin layer 1A, and the resin layer 1A is adhesively bonded to the image display unit 3 or the casing 4.
In FIG. 1, the resin layer 1A is adhesively bonded to the casing 4. However, either the image display unit 3 or the casing 4 is appropriately selected to adhesively bonding the resin layer 1A.

In FIG. 1, more specifically, as shown in FIG. 3(a), the image display device reinforcing sheet 1 is adhesively bonded to the entire inner surface of the bottom plate 5 of the casing 4. The image display device reinforcing sheet 1 may be however adhesively bonded to a portion requiring rigidity. Further, the image display device reinforcing sheet 1 is processed (cut) into an appropriate form, and may be adhesively bonded, for example, in a frame shape along the peripheral portion of the bottom plate 5 as shown in FIG. 3(b); in strips spaced apart from each other as shown in FIG. 3(c); or further, in a lattice shape as shown in FIG. 3(d).

The image display device reinforcing sheet 1 may be adhesively bonded to the frame plate 6, though not limited to the bottom plate 5 of the casing 4, and further, it can also be adhesively bonded to the portion requiring rigidity in the image display unit 3 as described above.
Then, as shown in FIG. 1, the resin layer 1A of the image display device reinforcing sheet 1 is adhesively bonded to the bottom plate 5 of the casing 4, and thereafter, as shown in FIG. 2(a), the image display unit 3 is assembled to the casing 4, so that the casing 4 houses the image display unit 3. When the casing 4 houses the image display unit 3, a spacing is provided between the image display unit 3 and the image display device reinforcing sheet 1 so that the resin layer 1A can be foamed.

Subsequently, as shown in FIG. 2(b), the resin layer 1A of the image display device reinforcing sheet 1 arranged in the casing 4 is foamed.
The process of foaming the resin layer 1A is appropriately selected according to the kind of resin composition or the like, and the resin layer 1A is, for example, heated at 160 to 210°C. Due to such heating, the resin layer 1A is cured and foamed simultaneously. When the resin layer 1A further contains a crosslinking agent, it is cured, foamed and crosslinked simultaneously. Due to the foaming of the resin layer 1A, the image display device reinforcing sheet 1 is firmly stuck to the image display unit 3.

A volume foaming ratio of the resin layer 1A after foaming (foamed layer 1C) is in the range of, for example, 1.1 to 5.0 times, or preferably 1.5 to 3.5 times when foamed. A density of the foamed layer (weight (g) of foamed layer/volume (g/cm³) of foamed layer) is in the range of, for example, 0.2 to 1.0 g/cm³, or preferably 0.3 to 0.8 g/cm³.
Then, as shown in FIG. 2(b), the resin layer 1A is cured and foamed to increase its strength and its thickness, thereby forming a foamed layer 1C. Thus, the formation of the foamed layer 1C increases in thickness of the image display device reinforcing sheet 1, which provides improved rigidity, thereby improving the strength of the casing 4 (and/or the image display unit 3) to which the image display device reinforcing sheet 1 is adhesively bonded.

Besides, the foamed layer 1C is lightweight and can effectively suppress the increase in weight of the image display device 2. further, after the foaming, the foamed layer 1C is restrained by the restricting layer 1B, so that the shape of the foamed layer 1C is satisfactorily maintained and the foamed layer 1C is sandwiched between the casing 4 (and/or the image display unit 3) and the restricting layer 1B, thereby providing further improved strength of the image display device reinforcing sheet 1.

The image display device reinforcing sheet 1 can follow along its bonded surface, so that even if the portion requiring rigidity has a complex shape, the image display device reinforcing sheet 1 can be adhesively bonded reliably with excellent workability.
Therefore, the image display device 2 reinforced with such image display device reinforcing sheet 1, although lightweight, can acquire sufficient rigidity, enabling an improvement in durability.

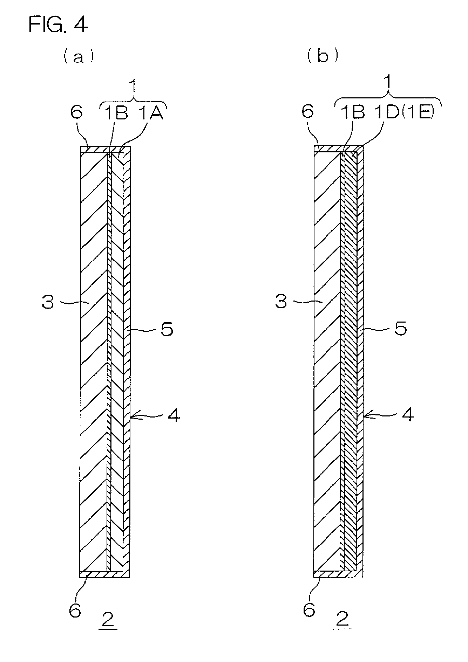

FIG. 4 is a side sectional view of the major portion of another embodiment (a mode where a resin layer is formed of curable resin layer or heat-sealable resin layer) of an image display device according to the present invention, (a) showing a state before curing or before heat sealing, and (b) showing a state after curing or after heat sealing. The same reference numerals are provided in each of the subsequent figures for members corresponding to each of those described above, and their detailed description is omitted.

Next, with reference to FIG. 4, a method for reinforcing an image display device by arranging an image display device reinforcing sheet, which is another embodiment of the method for reinforcing the image display device of the present invention, in the image display device and heating a curable resin layer to be cured will be explained.
The resin layer 1A of the image display device reinforcing sheet 1 is a curable resin layer which does not foam.
In this method, first, the image display device reinforcing sheet 1 is arranged in the image display device 2. More specifically, as referred to FIG. 1, the resin layer 1A of the image display device reinforcing sheet 1 is adhesively bonded to the bottom plate 5 of the casing 4, and thereafter, as shown in FIG. 4(a), the image display unit 3 is assembled to the casing 4, so that the casing 4 houses the image display unit 3. When the casing 4 houses the image display unit 3, the resin layer 1A of the image display device reinforcing sheet 1 does not foam, therefore the image display unit 3 and the image display device reinforcing sheet 1 are stuck firmly.

Subsequently, as shown in FIG. 4(b), the resin layer 1A of the image display device reinforcing sheet 1 arranged in the casing 4 is cured.
The process of curing the resin layer 1A is appropriately selected according to the kind of resin composition or the like, and the resin layer 1A is, for example, heated at 140 to 160°C. Due to such heating, the resin layer 1A is cured. When the resin composition of the resin layer 1A further contains a crosslinking agent, the resin layer 1A is cured and crosslinked simultaneously. In the resin layer 1A, the image display device reinforcing sheet 1 has substantially the same thickness before and after curing.

Then, the resin layer 1A is cured to increase its strength, thereby forming a cured layer 1D. Thus, the image display device reinforcing sheet 1 can improve the strength of the casing 4 (and/or the image display unit 3) to which the image display device reinforcing sheet 1 is adhesively bonded.
Besides, the cured layer 1D obtained by curing the resin layer 1A is lightweight and can effectively suppress the increase in weight of the image display device 2. Further, during (in the course of) curing and after curing, the resin layer 1A under curing (or the cured layer 1D after curing) is restrained by the restricting layer 1B, so that the shape of the cured layer 1D is satisfactorily maintained and the restricting layer 1B can provide further improved strength of the image display device reinforcing sheet 1.

Next, a method for reinforcing the image display device reinforcing sheet by arranging an image display device reinforcing sheet, which is another embodiment of the method for reinforcing the image display device of the present invention, in the image display device and heating and pressurizing a heat-sealable resin layer.
The resin layer 1A of the image display device reinforcing sheet 1 is a heat-sealable resin layer which does not foam.
In this method, first, the image display device reinforcing sheet 1 is arranged in the image display device 2. Specifically, as shown in FIG. 1, the heat-sealable resin layer 1A of the image display device reinforcing sheet 1 is adhesively bonded (temporarily attached or temporarily fixed) to the bottom plate 5 of the casing 4.

Then, as shown in FIG. 4(a), the image display unit 3 is assembled to the casing 4, so that the casing 4 houses the image display unit 3. When the casing 4 houses the image display unit 3, the resin layer 1A of the image display device reinforcing sheet 1 does not foam, therefore the image display unit 3 and the image display device reinforcing sheet 1 are stuck firmly.

Subsequently, as shown in FIG. 4(b), the image display device reinforcing sheet 1 is heated and pressurized. The heating temperature is in the range of, for example, 60 to 120°C, or preferably 70 to 100°C, depending upon the melting point and the softening temperature of the thermoplastic resin. Then, at the same time of the heating or after the heating, the image display device reinforcing sheet 1 is pressurized to an extent that the resin composition does not flow out of the bonded position, specifically at a pressure in the range of, for example, 0.15 to 10 MPa, using a press.

During the pressurization, at the same time of or after heating of the image display device reinforcing sheet 1 and the bottom plate 5, for example, the resin layer 1A is press-contacted toward the side of the bottom plate 5, for example, at a rate in the range of 5 to 500 mm/min. and a pressure in the range of 0.05 to 0.5 MPa with a laminator roll, a hand roll (roller) or a spatula.
In the resin layer 1A, the image display device reinforcing sheet 1 has substantially the same thickness before and after heating and pressurization.

Then, the above heating causes the resin layer 1A to be formed into a heat-sealing layer 1E. Further, the pressurization causes the heat-sealing layer 1E to be firmly stuck to the bottom plate 5 and the restricting layer 1B and then heat-sealed (adhered). Therefore, the heat sealing of the heat-sealing layer 1E can improve the strength of the bottom plate 5.
In addition, since the resin layer 1A does not include any of a thermosetting resin, a curing agent and a crosslinking agent, good storage stability of the resin layer 1A can be ensured and the bottom plate 5 can be reinforced by heating and pressurizing the resin layer 1A at low temperature for a short time as described above. As a result, the image display device reinforcing sheet 1 including the resin layer 1A is reliably produced, and while the use of the image display device reinforcing sheet 1 is ensured, the bottom plate 5 can be reliably reinforced by heating and pressurizing the image display device reinforcing sheet 1 at low temperature for a short time.

After the heating and the pressurization described above, further heating can be performed. In such heating, for example, the bottom plate 5 and the image display device reinforcing sheet 1 are fed into a coating drying oven used for drying the casing 4 after coating.

### EXAMPLES

While in the following, the present invention will be described in further detail with reference to Examples and Comparative Example, the present invention is not limited to any of them.

### 1) Test on Reinforcing Effect A

### a. Production of Image Display Device Reinforcing Sheet (Examples 1 to 5)

In the blending formulation shown in Table 1, the respective components were blended on a part-by-weight basis and then kneaded with a mixing roll to prepare the kneaded material.

In this kneading process, first, after a resin component, a filler and a tackifier (only in Examples 1 and 2) are kneaded with the mixing roll that is heated to 120 to 130°C, the kneaded material was cooled. The other components (a curing agent, a curing accelerator (only in Examples 3 to 5), a foaming agent (only in Examples 1 to 4), a crosslinking agent (only in Examples 1 and 2) and a cross-linking accelerator (only in Examples 1 and 2)) were further added to the kneaded material and then kneaded with the mixing roll.

Subsequently, the resulting kneaded material was rolled into a sheet form having a thickness of 0.6 mm by using a calendar roll to form a foamable resin layer (in Examples 1 to 4) and a curable resin layer (in Example 5), respectively. A glass cloth having a thickness of 0.2 mm serving as a restricting layer was stuck on each of the resin layers, to thereby produce image display device reinforcing sheets.

### b. Production of Test Piece

Each of the resin layers of the image display device reinforcing sheets thus produced was adhesively bonded to the entire inner surface of a test steel plate having 25 mm wide, 150 mm long and 0.8 mm thick under an atmosphere of 20°C. Then, it was heated at 160°C (Examples 1 and 2), 180°C (Examples 3 and 4) or 150°C (Example 5) for 20 minutes, to thereby form a foamed layer (Examples 1 to 4) or a cured layer (Example 5). A test piece was obtained in this manner.

### c. Evaluation of Image Display Device Reinforcing Sheet (in Examples)

After the test piece thus obtained in each of Examples 1 to 5 was supported with a span of 100 mm, with the test steel plate up, a testing bar was moved down on a lengthwise center portion of the test piece from above in a vertical direction at a rate of compression of 1 mm/min. and was pressed down against the test steel plate until the foamed layer or the cured layer was bent or displaced by 1 mm from its original position. The strength caused by this bend thereof was taken as a bending strength, which was evaluated as the reinforcing effect. Further, the reinforcing effect of a test steel plate without any of the foamed layer and the cured layer being provided was evaluated as Comparative Example 1. The results are shown in Table 1.

### 2) Test on Reinforcing Effect B

### a. Production of Image Display Device Reinforcing Sheet (Example 5)

According to the blending formulation of the resin composition of Example 5 in test on reinforcing effect A, a curable resin layer having a thickness of 0.8 mm was produced. A restricting layer having a thickness of 0.2 mm was then stuck on the resin layer, to thereby produce a 1.0-mm-thick image display device reinforcing sheet. The reinforcing sheet was cut into pieces having 25 mm wide and 310 mm long.

### b. Production of Test Piece

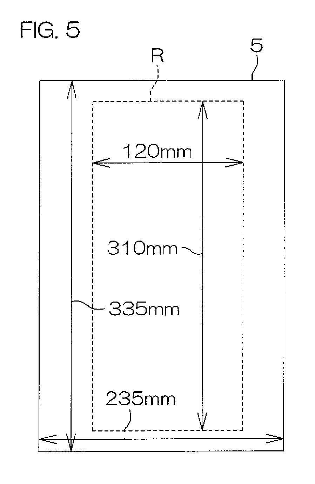

Next, the image display device reinforcing sheet was adhesively bonded in strips as shown in FIGS. 6(a), 6(c) and 6(d) to the bottom plate 5 of the liquid crystal monitor unit shown in FIG. 5.

The bottom plate 5 was formed of magnesium alloy (product number: Mg (AZ91D)) and had a size of 335 mm long and 235 mm wide as shown in FIG. 5.
A bonding area R to which the image display device reinforcing sheet 1 was adhesively bonded was narrower than the entire inner surface of the bottom plate 5 so that the inner peripheral portion of the bottom plate 5 was exposed, in terms of providing a liquid crystal panel, a backlight and a wiring connectors of a light conductive plate or the frame plate 6 in the casing 4. The bonding area R had a size of 310 mm long and 120 mm wide, as indicated by dotted lines in FIG. 5.

As shown in FIG. 6(a), one sheet of the image display device reinforcing sheet 1 was adhesively bonded to a widthwise center portion of the bonding area R of the bottom plate 5 over the lengthwise direction at 20°C (room temperature). The resin layer 1A was then press-contacted with the bottom plate 5 by reciprocating rollers of 2 kg thereon once. The resulting resin layer was then heated at 150°C for 30 minutes to thereby form a cured layer 1D. Subsequently, the cured layer 1D was allowed to stand at room temperature (23°C) for 2 hours to thereby produce a test piece.

Next, as shown in FIGS. 6(c) and 6(d), three or four sheets of the image display device reinforcing sheet 1 were adhesively bonded in strips, which were equally spaced apart from each other in the widthwise direction, to a widthwise center portion of the bottom plate 5. Thereafter, the image display device reinforcing sheets 1 were heated in the same manner as above, to thereby form cured layers 1D. Test pieces were obtained in this manner.
As shown in FIG. 6(c), the total width of the three sheets of the image display device reinforcing sheet 1 was 75 mm, and the spacing between the respective image display device reinforcing sheets 1 was 22.5 mm. Further, as shown in FIG. 6(d), the total width of the four sheets of the image display device reinforcing sheet 1 was 100 mm, and the spacing between the respective image display device reinforcing sheets 1 was 6.7 mm.

### c. Evaluation of Image Display Device Reinforcing Sheet

After each of the test pieces was supported on a support pedestal having 100 mm long, a radius of curvature of 2 mm and a span of 100 mm, with the bottom plate 5 up, a testing bar having a diameter of 18 mm was moved down on a lengthwise center portion of the test piece from above in a vertical direction at a rate of compression of 5 mm/min. and was pressed down against the bottom plate 5 until the cured layer 1D was bent or displaced by 1 mm and by 2 mm from its original position. The strength caused by these bends thereof was taken as a bending strength, which was evaluated as the reinforcing effect.

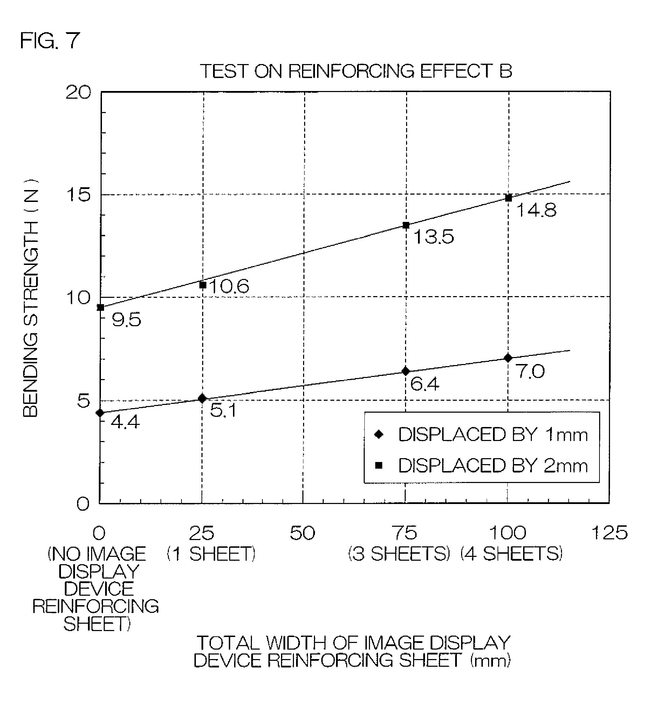

The reinforcing effect of the bottom plate 5 without the image display device reinforcing sheet 1 being provided was separately evaluated as blank in the same manner as above. The results are shown in FIG. 7.

### 3) Test on Reinforcing Effect C

### a. Production of Image Display Device Reinforcing Sheet (Example 6)

An image display device reinforcing sheet equipped with a heat-sealable resin layer and a restricting layer was produced.

To produce such image display device reinforcing sheet, first, 50 parts by weight of terpene resin and 50 parts by weight of carbon black were blended with 100 parts by weight of ethylene-ethyl acrylate copolymer (EEA) and the mixture was kneaded with a mixing roll at 100°C to prepare the kneaded material of the resin composition. The kneaded material was then shaped into a heat-sealable resin layer having a thickness of 1.8 mm by using a calendar roll.

Subsequently, a restricting layer made of glass cloth having a thickness of 0.2 mm was stuck on the resin layer, to thereby produce an image display device reinforcing sheet having a thickness of 2.0 mm.
The image display device reinforcing sheet was then cut into pieces having 25 mm wide and 310 mm long.

### b. Production of Test Piece

Next, the image display device reinforcing sheet 1 was adhesively bonded in strips, as shown in FIGS. 6(a) to 6(d), to the bottom plate 5 of the liquid crystal monitor unit shown in FIG. 5.

One, three and four sheets of the image display device reinforcing sheet 1 were adhesively bonded to the bottom plate 5 in the same arrangement as in test on reinforcing effect B described above.
Further, in the same manner as in the above test on reinforcing effect B, two sheets of the image display device reinforcing sheet 1 were adhesively bonded, as shown in FIG. 6(b). Specifically, the two sheets of the image display device reinforcing sheet 1 were adhesively bonded in strips, which were equally spaced apart from each other in the widthwise direction, to a widthwise center portion of the bottom plate 5. The total width of the two sheets of the image display device reinforcing sheet 1 was 50 mm, and the spacing between the two sheets of the image display device reinforcing sheets 1 was 23 mm.

The image display device reinforcing sheet 1 was adhesively bonded as follows.
First, the bottom plate 5 of the liquid crystal monitor unit 1 was preheated to 120°C. The image display device reinforcing sheet 1 was then adhesively bonded to the bottom plate 5 while being heated at 120°C, to thereby form a heat-sealing layer 1E. The heat-sealing layer 1E was then pressurized onto the bottom plate 5 by reciprocating rollers of 2 kg thereon twice. Subsequently, the heat-sealing layer 1E was allowed to stand at room temperature (23°C) for 2 hours to thereby produce a test piece.

### c. Evaluation of Image Display Device Reinforcing Sheet

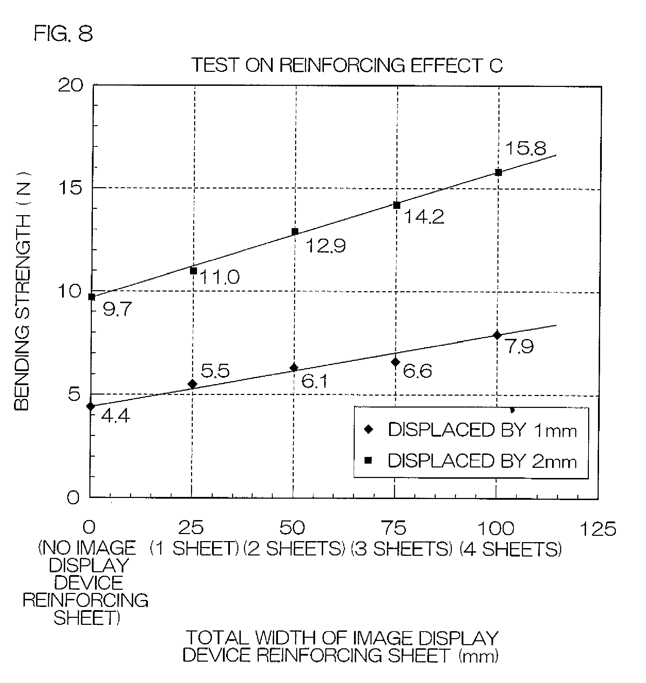

The reinforcing effect of the test piece was evaluated in the same manner as in the evaluation of the image display device reinforcing sheet used in the above test on reinforcing effect B. The results are shown in FIG 8.

### 4) Test on Adhesiveness

### a. Production of Image Display Device Reinforcing Sheet (Examples 1 to 5)

According to the same blending formulation as in the above test on reinforcing effect A, the image display device reinforcing sheets of Examples 1 to 5 were produced, and each of them was cut into pieces of 25 mm wide.

### b. Evaluation of Image Display Device Reinforcing Sheet

Then, the cut piece of the image display device reinforcing sheet of each of Examples 1 to 5 was press-contacted with the applied surface of each of the test steel plates by rollers of 2 kg under an atmosphere of 5°C. After 30 minutes passed, a 90° peel test (tensile speed: 300 mm/min.) was carried out to measure the adhesion (N/25 mm), and the measured values were evaluated as the adhesiveness. The results are shown in Table 1.

### 5) Young's Modulus

### a. Production of Resin Layer (Examples 6 and 7)

In the blending formulations of Examples 6 and 7 shown in Table 1, the respective components were blended on a part-by-weight basis and then kneaded with a mixing roll to prepare the kneaded material. In this preparation process, an ethylene copolymer, a filler and a tackifier were kneaded at 100°C.

The kneaded material thus prepared was then formed into a resin layer having a thickness of 0.8 mm by using a calendar roll.

### b. Evaluation of Resin Layer

The 0.8-mm-thick resin layer formed by rolling in Examples 6 and 7 was cut into pieces having 10 mm wide and 100 mm long. The tensile strength thereof was measured in a distance between the chucks of 50 mm at a rate of 5 mm/min. with a universal testing machine, and the Young's modulus was calculated thereby. The results are shown in Table 1.

[Table 1]

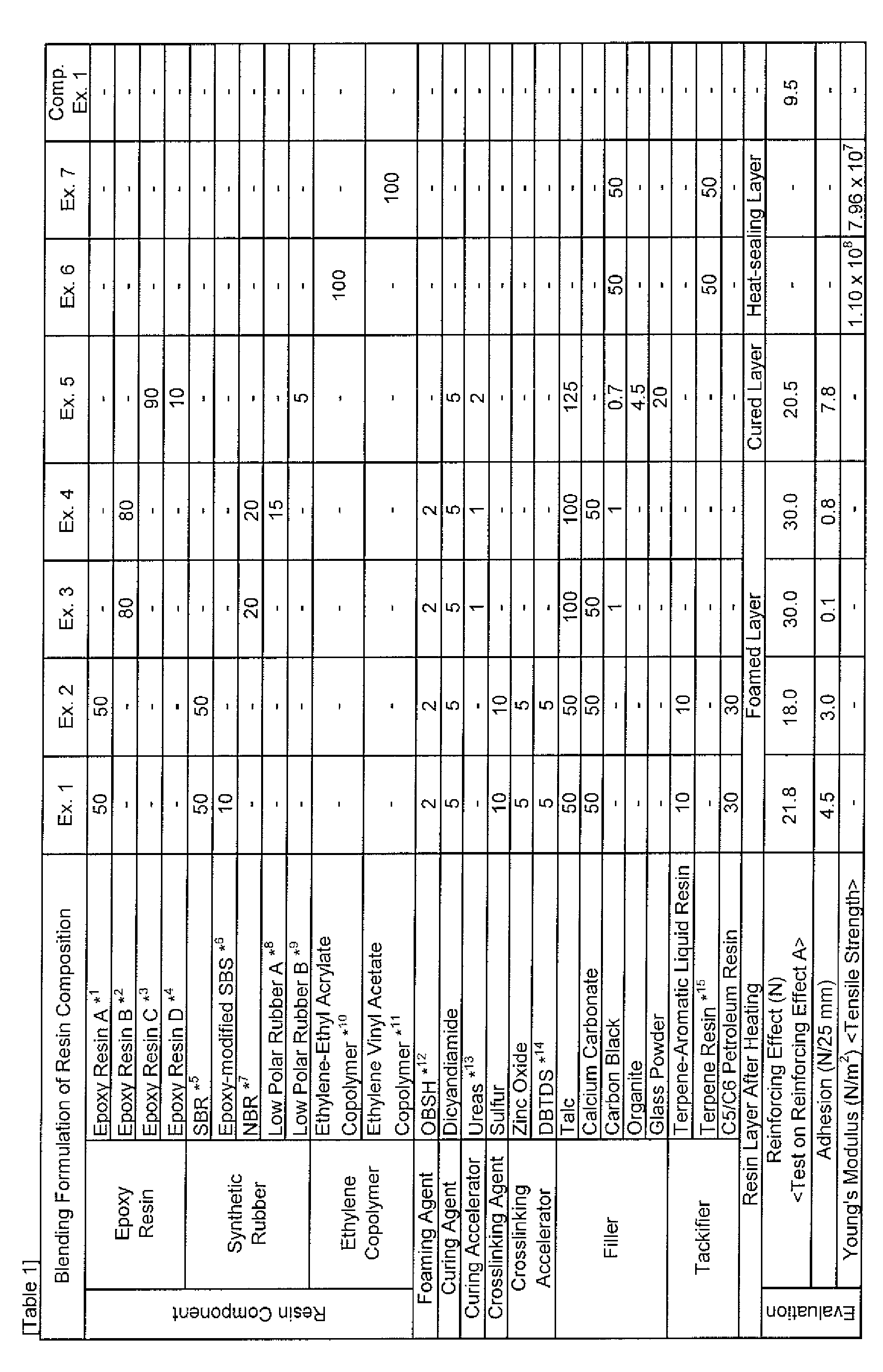

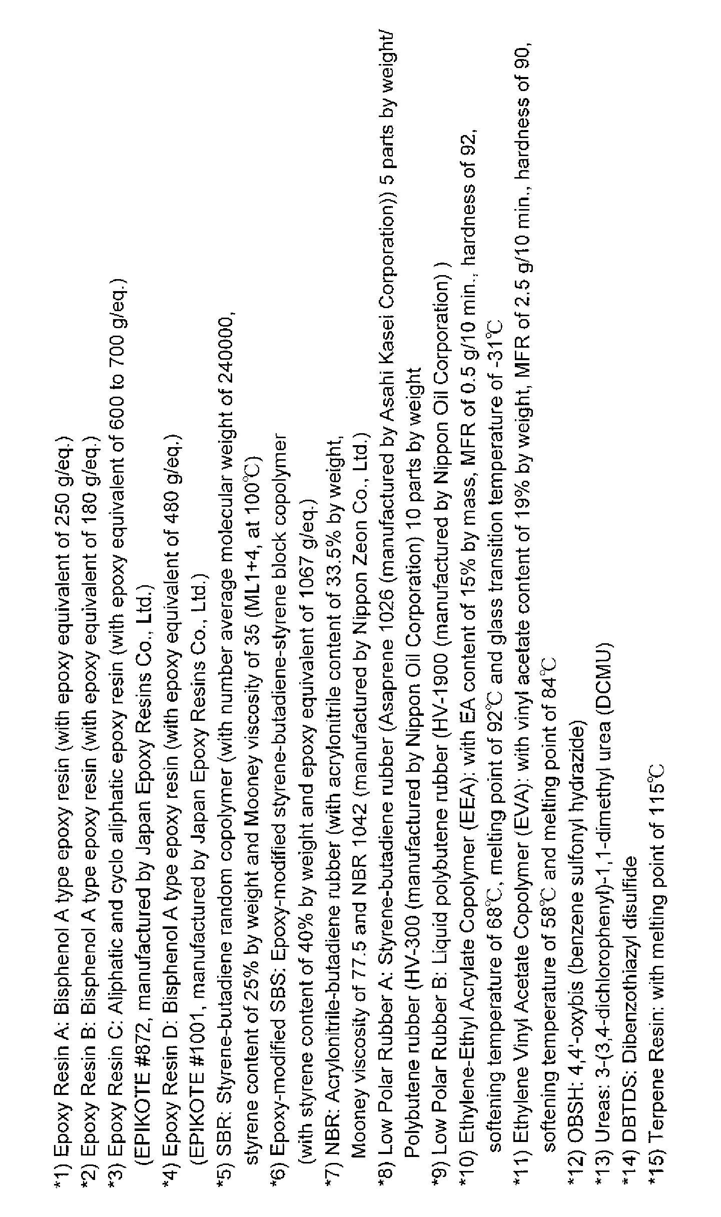

While the illustrative embodiments of the present invention are provided in the above description, such is for illustrative purpose only and it is not to be construed restrictively. Modification and variation of the present invention that will be obvious to those skilled in the art is to be covered by the following claims.

### INDUSTRIAL APPLICABILITY

The image display device reinforcing sheet, the image display device and the method for reinforcing the same according to the present invention are used to reinforce electrical equipment such as computer displays, televisions, cellular phones and game machines.

## Claims

1. An image display device reinforcing sheet comprising a resin layer; and a restricting layer laminated on the resin layer.

2. The image display device reinforcing sheet according to claim 1, wherein the restricting layer is a glass cloth.

3. The image display device reinforcing sheet according to claim 1, wherein the resin layer comprises an epoxy resin and a curing agent.

4. The image display device reinforcing sheet according to claim 3, wherein the resin layer further comprises synthetic rubber.

5. The image display device reinforcing sheet according to claim 4, wherein the synthetic rubber comprises low polar rubber.

6. The image display device reinforcing sheet according to claim 3, wherein the resin layer further comprises a foaming agent and is foamable.

7. The image display device reinforcing sheet according to claim 6, wherein the resin layer further comprises synthetic rubber.

8. The image display device reinforcing sheet according to claim 7, wherein the synthetic rubber comprises styrene synthetic rubber and/or acrylonitrile-butadiene rubber.

9. The image display device reinforcing sheet according to claim 1, wherein the resin layer comprises an ethylene copolymer.

10. The image display device reinforcing sheet according to claim 9, wherein the resin layer further comprises a filler and a tackifier.

11. The image display device reinforcing sheet according to claim 10, wherein the resin layer has a Young's modulus at 23°C of 1.0 x 10⁷ N/m² or more.

12. An image display device, wherein an image display device reinforcing sheet comprising a resin layer and a restricting layer laminated on the resin layer is arranged.

13. A method for reinforcing an image display device comprising the steps of:
arranging an image display device reinforcing sheet comprising a resin layer and a restricting layer laminated on the resin layer in the image display device; and
heating the resin layer.
